(19)

Europäisches
Patentamt
European
Patent Office
Office européen
des brevets

(11) **EP 4 020 304 A1**

(12) **EUROPEAN PATENT APPLICATION**

(43) Date of publication:
   **29.06.2022 Bulletin 2022/26**

(21) Application number: **21000357.0**

(22) Date of filing: **16.12.2021**

(51) International Patent Classification (IPC):
   **G06F 40/279** (2020.01)    **G06F 40/284** (2020.01)
   **G06F 40/295** (2020.01)    **G06F 40/30** (2020.01)
   **G06N 20/00** (2019.01)

(52) Cooperative Patent Classification (CPC):
   **G06F 40/30; G06F 40/279; G06F 40/284;**
   **G06F 40/295; G06N 20/00**

(84) Designated Contracting States:
   **AL AT BE BG CH CY CZ DE DK EE ES FI FR GB**
   **GR HR HU IE IS IT LI LT LU LV MC MK MT NL NO**
   **PL PT RO RS SE SI SK SM TR**
   Designated Extension States:
   **BA ME**
   Designated Validation States:
   **KH MA MD TN**

(30) Priority: **23.12.2020 PT 2020116967**

(71) Applicant: **Altice Labs, S.A.**
   **3810-106 Aveiro (PT)**

(72) Inventor: **DA SILVA FURÃO, Sara**
   **3810-106 Aveiro (PT)**

(74) Representative: **Arnaut, José Luis**
   **Rui Pena Arnaut & Associados**
   **Rua Sousa Martins, 10**
   **1050-218 Lisboa (PT)**

(54) **METHDO FOR NATURAL LANGUAGE PROCESSING BASED ON MULTI-MODEL SEGMENTS USING AN HYBRID NLP**

(57)    The present invention provides a Natural Language Processing solution based on a method using small trained data models, which may be individually activated or signed, to select the most suitable in order to give the best answer, given the context of the dialogue. This method allows the use of multiple models previously created, without requiring the training of a huge dataset, and is based on the application of heuristics (102) over the results of a Natural Language Understanding engine, taking advantage of dataset segmentation (101) to define contexts for each dataset (100), enabling context aware Natural Language Processing and a Hybrid NLP engine which reduce or eliminate ambiguity on choosing the best answer from all models. This would not be possible with a Natural Language Understanding engine alone.

Figure 1

EP 4 020 304 A1

**Description**

## FIELD OF THE INVENTION

The present invention is enclosed in the technical area of Natural Language Processing. Specifically, it belongs to field of conversational artificial intelligence and relates to Natural Language Understanding engines and the process of choosing the best model to apply at each moment to a given utterance.

## PRIOR ART

Nowadays one live in a digital age where companies and industries are looking for a digital transformation. This digital transformation implies many changes in society, business and industry driven by information technologies that allow that data can be processed in real time and delivered to users in an "intelligent" and customized way. It is at this point that the question arises: how to process a huge amount of data quickly? Natural Language Understanding (NLU) engines for conversational Artificial Intelligence (AI) are based on the handling of large datasets of sentences, also designated as training phrases, and their respective classification. A supervised learning approach needs labeled data, which requires time and effort. Time and specific knowledge for building and processing data in order to build a Virtual Assistant based in supervised learning is what must of users don't have. What can one do with unlabeled data? One important characteristics of an intelligent system is to understand stories like humans do. A story is a sequence of sequences and can be in the form of plain text or spoken content. To evaluate the model's understanding of the story, it is asked to answer questions about the story. This task is called question and answering (QA), and it also exists a frequently asked questions (FAQs) that as the name indicates are the most frequently asked questions and answers made by users. FAQs are a common use in company's use cases needs on their' digital transformation.

## PROBLEM TO BE SOLVED

The Natural Languages Understanding (NLU) and the Natural Language Processing (NLP) technologies and methods currently in use have a problem handling big datasets. Moreover, adding to the mention problem, exists the issue of dealing or coexisting two different technical approaches: 1) models based in labelled data (supervised models) and 2) models based on unlabeled data (unsupervised or based pre-trained models) . This difficulty or ambiguity in handling with both types of data and huge datasets, leads to false positives, resulting on incorrect answers.
The present invention aims to overcome such issues by developing a method for dealing and choosing the better approach for each user utterance in a NLP engine, in order to return the most appropriate answer, selecting the right model, from a list of models assigned.

## SUMMARY OF THE INVENTION

The present invention relates to a method that allows the NLP of an utterance or sentence through several models available, models that can be of different natures, namely: 1) models based in labelled data (supervised models) and 2) models based on unlabeled data (unsupervised or based pre-trained models) ; and which may be individually activated or signed, selecting the most suitable in order to give the best answer, given the context of the dialogue. The user utterances are tested against all activated supervised and unsupervised models, determining the most accurate answer, by running a pipeline of tests that either eliminate or reduce ambiguity, before identifying the proper and final answer.
The present invention and the solution proposed born with the goal of resolve the limitation present in this state of art, and it emerged from the need of improving and start offering a solution that combines both learnings: the supervised and unsupervised.

## DESCRIPTION OF FIGURES

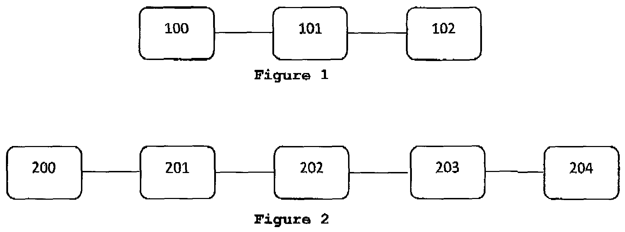

Figure 1 - diagram pipeline representation of the dataset preparation and the heuristic model used in the present invention, wherein the reference numbers represent:

100 - definition of the large dataset with labelled or unlabelled data to feed AI model, including the intents and their associated training phrases (labelled data) or questions and answers (unlabelled data);
101 - dataset segmentation over "linguistic understanding domains";

102 - heuristic model for intent or question selection.

Figure 2 - diagram pipeline representation of the heuristic and model suitable answer selection used in the present invention, wherein the reference numbers represent:

200 - minimum confidence level of the intent and/or question;
201 - conversation context;
202 - matched entities;
203 - confidence value of the intent and/or question;
204 - selection of the correct answer.

## DETAILED DESCRIPTION

The process that supports the present innovation described in the Summary of the invention will be detailed bellow in accordance with other advantageous and/or preferred embodiments of implementation of the present invention.
The present invention provides a method to improve the known NLP techniques, considering the possibility of adding unsupervised models, which allows handling of huge datasets of intents and of frequently asked questions (FAQ) (100). Considering the objective to build a conversational AI able to talk about a set of subjects and their supporting dataset with labeled and unlabeled data, it was considered a process composed by the following stages:

1. dataset segmentation (101) as presented in Figure 1;
2. heuristic tests pipeline that are used to perform intent of question identification (102); and
3. selection of the suitable answer when an end-user interacts with the method (204) as presented in Figure 2.

The selection heuristics is the core of the method now developed.

Stage 1:

The first stage of the proposed method impacts the way data is categorized and maintained. To optimize the information organization, and the corresponding mapped training phrases that may include entities, which are stored in a storage mechanism, it can be split by a user, into multiple sub-sets of intents, creating smaller models, which are designated as programs. However, the present invention adds the possibility to support new kind of models, the unsupervised or unlabelled, based on pre-trained data, that permits to handle a big that set of information, like the FAQs (where for a topic there are no training phrases). The user has the liberty to define a splitting logic, being free to split the entire data to be identified into different conversational subjects, respecting the premise that a program should hold sub-sets of data (labeled or unlabeled) which are related with each other in a "linguistic understanding domain". These intents may include certain logical links between them and also the models unlabeled that support the FAQs. In one example, when requesting information on the technical characteristics of a smartphone, such as the number of megapixels of its camera, its processor speed or its RAM amount, all the queries have a common element that links them logically since they represent characteristics of the smartphone specification. This segmentation is performed by the user, as the dataset creator, since he has the ability to understand the logical relationships between concepts when classifying the data.
A set of intents for each program may be formulated as:

$$PI_k = y^k = \{y_1^k, \dots, y_n^k\}$$
$$(\text{Eq.1})$$

where k denotes each intent program.
The original vector of intents y defines a space, in mathematical terms, with such space being defined by the vectors of the associated training phrases. These vectors generated from training phrases are the result of a vectorization operation performed in accordance with "word2vec" NLP operation. In other words, an intent has an associated vector space defined by the set of vectors generated from the training phrases associated with that intent.
The present methodology includes the notion of Program FAQs, based in unlabeled models that can be defined by a set of questions of each program as follow:

$$PF_k = q^k = \{q^k_{1,...}, q^k_n\}$$

$$(\text{Eq.2})$$

where $k$ denotes each FAQ program and $q$ denotes each question.

The program is represented by a set of associated questions $q^k$ (FAQs). In this way, the evaluation at the natural language understanding (NLU) level it becomes / evolves to be performed over the y vector or q, that is, the calculation of the degree of confidence the utterance refers to a certain intent or question, the sets of intents and questions are stored separately with the clear notion that the confidence value refers to an intent or question that is part of the program that they belong.

This will allow to treat the information and programs that have different natures independently and perform some deterministic tests (presented ahead) obtaining a hybrid methodology, that combines a probabilistic model with a rules-based model.

Stage 2:

The second stage of the method allows to improve the accuracy of the first stage by selecting a plurality of confidence thresholds per program, in the answer recognition step, instead of using a single value for all programs. There exists a set of problems associated with identifications of intents from a single dataset. With the segmentation approach (101), the problems / difficulty can be overtaken / controlled. In more extreme situations, it is possible to add to some programs high confidence thresholds than to others for intent or question identification. Running the utterances against all the model's programs may thus yield one or more candidates.

The intent candidates can be defined as the following:

$$y_{candidates} = \begin{cases} y_i, & yconfidence_i > a_k \ : \ y_i \subset PI_k \\ \emptyset \end{cases}$$

$$(\text{Eq.3})$$

where $a_k$ is the threshold for a specific program $PI_k$ where the intent $y_i$ is defined.

The questions candidates are thus the following:

$$q_{candidates} = \begin{cases} q_i, & qconfidence_i > a_k \ : \ q_i \subset PF_k \\ \emptyset \end{cases}$$

$$(\text{Eq.4})$$

where $a_k$ is the threshold for a specific program $PF_k$ where the question $q_i$ is defined.

After this step, for the candidates that remain, further tests criteria will be applied. Another important part of the method takes into consideration the conversation context history for intent programs. This method is irrelevant for FAQs program (*PF*), because represents open questions without any flow. In relation to intents programs more tests should be made if still exists ambiguity over the $y_{candidates}$ vector.

An heuristic can therefore be used to model that previous assumption / affirmation, and that is the base of the proposed method.

$$y'_{candidates} = \begin{cases} y_i, & y_i \in P_k : \exists \ y_k \in P_k, y_k \in H_y \\ \emptyset \end{cases}$$

$$(\text{Eq.5})$$

The two previously described criteria help solve multiple intent ambiguity, and the first one helps to solve multiple question ambiguity, but the fact is that in some situations ambiguity will still remain. In that cases, a further stage of processing should be applied to solve the ambiguity, which is related with entities extraction and analyses. Entities may be nouns or contents of actions that are performed. As an example, in an utterance: "I like to play football", football is a noun. One could easily replace "football" by "basketball", "snooker", "hockey" changing the object while retaining the idea that "I like to play <sport>". Therefore, entities are the nouns or the content for the action that needs to be performed. For example, London, Madrid and Paris are different words, but they all refer to a city, so city should be an entity. Utterances may include several entities in them, and the model that identifies intents from utterances is also capable of extracting the entities from the utterance. For each utterance, the results of intent recognition must also include the recognized entities and the intent selection heuristic, when faced with ambiguity between certain intent candidates, will choose the intent that possesses a higher number of recognized entities. However, if both intent candidates have the same number of recognized entities, the ambiguity will continue, and the solution will not be able to solve the problem.

Confronted with this remaining ambiguity, the heuristic can default to the behavior of selecting the highest confidence intent. This method is not applied to FAQs programs, because it's not needed to extract a particular word from utterance to perform an action.

If after all these three criteria applied, the ambiguity remains, then the highest confidence candidate identified is chosen. The last candidates are, therefore, the following:

$$h_{candidates} = \{y_k, q_i\}$$

$$(Eq.6)$$

where $h_{candidates}$, represent a set of candidates, $y_k$ represents the chosen intent after all the criteria mentioned before, and $q_i$ represents the highest confidence question candidate identified.

As mentioned for stage 1, two types of programs exist, intents programs (also called supervises or labeled data) (*PI*) and FAQs programs (unsupervised or unlabeled data) (*PF*). Running an utterance against all the model's programs will imply the existent of hybrid NLP if exits at least one program of each type.

Stage 3:

The third stage of the method choose the best suited intent or question selecting the best answer using a hybrid NLP criterion.

The first step will verify the following situations:

If the selected intent and the selected question are 0, then a fallback is returned:

$$h_{candidate} = \{y_k = \emptyset, q_i = \emptyset\} = \emptyset$$

$$(Eq.7)$$

If the selected intent isn't Ø and the selected question is Ø, then the intent is the final candidate:

$$h_{candidate} = \{y_k \neq \emptyset, q_i = \emptyset\} = y_k$$

$$(Eq.8)$$

If the selected intent is Ø and the selected question isn't Ø, then the question is the final candidate.

$$h_{candidate} = \{y_k = \emptyset, q_i \neq \emptyset\} = q_i$$

$$(Eq.9)$$

If the selected intent isn't Ø and the question isn't Ø, then it's necessary to apply hybrid NLP criteria to find out the final candidate.

$$h_{candidate} = \{y_k \neq \emptyset, q_i \neq \emptyset\} = ?$$

$$(Eq.10)$$

In this second step, it's checked the number of matched contexts (201) of the intent performed previously on stage 2 and more weight is assigned to the intent depending on that number.

In the third step, it's checked the number of matched entities (202) of the intent performed previously on stage 2 and more weight is assigned to the intent depending on that number.

In the last step, the confidence value (203) of the intent and question is checked, bearing in mind that they have different measures of confidence that could imply a model calibration. After all this steps, the suitable answer is returned as presented in Figure 2.

## Description of the embodiments:

In an embodiment of the method for natural language processing based on multi-model segments using hybrid NLP of the present invention, the following actions are implemented:

i. definition of intents or questions for each dataset or program (100) . In the models of type supervised or labelled data, the method provides the definition of intents and respective training phrases for each model. The same applies for models of type unsupervised or unlabeled data, wherein it is provided the definition of questions and answers data.

ii. selection and activation and de-activation of the models to use according to the user's intent or question identification needs. Users may define multiple datasets or programs, and may specify or select a number of those programs they wish to use (a user defined sub-set or their entirety). Each program can be of two different types: 1) being comprised of a dataset of utterances, or training phrases, that define intents, which are self-contained in nature, but share similarity in purpose, and could be logically linked, or 2) being comprised of dataset of questions and answer, hereby called the FAQ program.

iii. knowledge extraction, that is: intent or question identification and entity recognition, from processing natural language, over all selected models. For that purpose, a heurist pipeline is established: In the first step, it is performed an intent or question recognition process from an utterance (200), based on a pre-set confidence threshold that is previously defined by the user. For example, a higher threshold should be set when the intent or question expected to be identified is very specific and it is necessary to really be certain of the subject being talked about. In the second step, the conversation context (201) is used to refine the results obtained. Finally, the third step, performs the extraction of entities (202) - such as the name of a person, a city, a time or an object - from each utterance of the intent, and counts the number of matched entities from the utterance, to increase the likelihood of choosing the correct intent or question. The heuristic is based on a succession of tests (presented ahead) that will help, based on smaller and structured datasets, the so-called programs.

iv. the algorithm that shall be applied to the entirety of the extracted knowledge, from all models, to identify the user intention and provide the best answer;

v. hybrid NLP approach should be performed if in the list of programs signed exists at least one program of intents and one of FAQs, in order to be find the best answer to return (204).

According to the method developed, each model could be instantiated in a natural language understanding (NLU) engine separately and used in isolation. Additionally. all models can be used together, without foregoing the ability to identify the intent provenience from a specific Program.

According to the method developed, the selection of the best knowledge model for the provided input, is executed by processing the results of a NLU engine, along a pipeline of heuristic-based tests that eliminate incorrect intents or questions, albeit possessing high confidence results, thus reducing ambiguity in intent or question identification. Another set of components in the pipeline may be applied on the NLP Hybrid engine in order to choose the suitable answer that can be from an intent or question.

## Claims

1. Method for natural language processing based on multi-model segments using hybrid Natural language processing, **characterized by** comprising the following steps:

I. Dataset segmentation of an utterance in order to generate multiple sub-sets of intents programs and/or questions programs;

II. Knowledge extraction from the set of intent and question programs comprising the steps of:

i. Intent or question recognition by assigning a confidence threshold $a_k$ to each program, to generate a set of intent candidates, $y_{candidates}$, and question candidates, $q_{candidates}$, which confidence value is above $a_k$;

ii. determine a set of $y'_{candidates}$, based on a conversion context vector;
iii. Extraction of entities from each resulting intent candidate $y_k$, of the set $y'_{candidates}$, in order to select an $y_k$ with more recognized entities;

III. Select from a set of candidates $h_{candidates} = \{y_k, q_i\}$, where $y_k$ is the selected intent, and $q_i$ represents the highest confidence question candidate, the final candidate, according to the following rule:

- If $\{y_k = \varnothing, q_i = \varnothing\}$, then $h_{candidates} = \varnothing$ ;
- If $\{y_k \neq \varnothing, q_i = \varnothing\}$, then $h_{candidates} = y_k$;
- If $\{y_k = \varnothing, q_i \neq \varnothing\}$, then $h_{candidates} = q_i$ ;
- If $\{y_k \neq \varnothing, q_i \neq \varnothing\}$, then $h_{candidates}$ is the one with highest confidence value of each one.

2. Method according to claim 1, wherein if more than one intent candidate, $y_k$, have the same number of recognized entities, it is selected the $y_k$ with highest confidence value.

3. Method according to any of the previous claims, wherein for performing the selection of the final candidate in step III, the confidence value of the intent $y_k$ is updated by:

- checking the number of $y_k$'s matched contexts performed on step II.ii, and assigned a higher confidence value to $y_k$ depending on that number; and
- checking the number of matched entities performed on step II.iii, and assigned a higher confidence value to $y_k$ depending on that number.

4. Method according to claim 1, wherein an intent program is a supervised type model comprising a dataset of utterances or training phases; a program intent being defined as:

$$PI_k = y^k = \{y_1^k, ..., y_n^k\}$$

Where $k$ denotes each intent program, and $y$ denotes each intent.

5. Method according to any of the previous claims, wherein a question program is an unsupervised type model and comprises a set of questions and answers; a question program being define as:

$$PF_k = q^k = \{q_1^k, ..., q_n^k\}$$

Where $k$ denotes each question program and $q$ denotes each question.

6. Method according to any of the previous claims, wherein the determination of intent candidates, $y_{candidates}$, is performed according to:

$$y_{candidates} = \begin{cases} y_i, & yconfidence_i > a_k : y_i \subset PI_k \\ \emptyset \end{cases}$$

Where $a_k$ is the threshold for a specific program $PI_k$ where the intent $y_i$ is defined.

7. Method according to any of the previous claims, wherein the determination of intent candidates, $q_{candidates}$, is performed according to:

$$q_{candidates} = \begin{cases} q_i, & qconfidence_i > a_k : q_i \subset PF_k \\ \emptyset \end{cases}$$

Where $a_k$ is the threshold for a specific program $PF_k$ where the intent $q_i$ is defined.

8. Method according to any of the previous claims, wherein the conversion context vector for generating $y'_{candidates}$,

is represented by a vector $H_y = H_t = \{h_0,...,h_{t-1}\}$ including all previously identified intents up till interaction $t$.

9. Method according to claim 6, wherein the determination of $y'_{candidates}$ based on the conversion context vector $H_y$, is as follows:

$$y'_{candidates} = \begin{cases} y_i, & y_i \in PI_k; \exists\, y_k \in PI_k, y_k \in H_y \\ \emptyset \end{cases}$$

wherein $H_y$ is the historic intents part of sub-set $PI_k$.

10. Method according to any of the previous claims, wherein each program is instantiated in a Natural Language Engine separately and used in isolation.

11. Method according to any of the previous claims wherein the confidence threshold is set by a user based on the intent or question to be identified; said threshold value being dependent on a level of certainty in identifying a subject being talked.

```
┌────────┐      ┌────────┐      ┌────────┐
│  100   │──────│  101   │──────│  102   │
└────────┘      └────────┘      └────────┘
```

**Figure 1**

```
┌────────┐    ┌────────┐    ┌────────┐    ┌────────┐    ┌────────┐
│  200   │────│  201   │────│  202   │────│  203   │────│  204   │
└────────┘    └────────┘    └────────┘    └────────┘    └────────┘
```

**Figure 2**

Europäisches
Patentamt

European
Patent Office

Office européen
des brevets

# EUROPEAN SEARCH REPORT

Application Number

EP 21 00 0357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/327284 A1 (SAPUGAY EDWIN [US] ET AL) 15 October 2020 (2020-10-15) * paragraphs [0063], [0067] – [0068], [0037], [0095]; claims 1-7; figures 4-8 * ----- | 1-11 | INV. G06F40/279 G06F40/284 G06F40/295 G06F40/30 G06N20/00 |
| X | US 2017/242886 A1 (JOLLEY CHARLES [US] ET AL) 24 August 2017 (2017-08-24) * paragraphs [0080] – [0087], [0201] – [0212]; claims 1-8; figure 4 * ----- | 1-11 | |
| X | US 2018/293221 A1 (FINKELSTEIN ERICH-SOREN [US] ET AL) 11 October 2018 (2018-10-11) * paragraphs [0029] – [0030], [0053], [0055], [0057] – [0069] * ----- | 1-11 | |

TECHNICAL FIELDS
SEARCHED    (IPC)

G06F
G06N

The present search report has been drawn up for all claims

| Place of search | Date of completion of the search | Examiner |
|---|---|---|
| Berlin | 6 May 2022 | Alt, Susanne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 00 0357

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2022

| Patent document cited in search report | | Publication date | Patent family member(s) | | Publication date |
|---|---|---|---|---|---|
| US 2020327284 | A1 | 15-10-2020 | US | 2019294676 A1 | 26-09-2019 |
| | | | US | 2019294678 A1 | 26-09-2019 |
| | | | US | 2019295535 A1 | 26-09-2019 |
| | | | US | 2019295536 A1 | 26-09-2019 |
| | | | US | 2019295537 A1 | 26-09-2019 |
| | | | US | 2020327284 A1 | 15-10-2020 |
| | | | US | 2021200960 A1 | 01-07-2021 |
| | | | US | 2021224485 A1 | 22-07-2021 |
| | | | US | 2022058343 A1 | 24-02-2022 |
| US 2017242886 | A1 | 24-08-2017 | US | 2017242886 A1 | 24-08-2017 |
| | | | WO | 2017143338 A1 | 24-08-2017 |
| US 2018293221 | A1 | 11-10-2018 | NONE | | |

EPO FORM P0459

For more details about this annex : see Official Journal of the European Patent Office, No. 12/82